# EUROPÄISCHE PATENTSCHRIFT

(11) **EP 0 896 023 B1**
(45) Veröffentlichungstag und Bekanntmachung des Hinweises auf die Patenterteilung: **28.05.2003**
(21) Anmeldenummer: 98113768.0
(22) Anmeldetag: 23.07.1998
(51) Int. Cl.: C08K 13/02

(54) **Synergistiche Flammschutzmittel-Kombination für Polymere**
Synergistic combination of flame protecting agents for polymers
Combination synergistique d'agents ignifugeants pour les polymères

(30) Priorität: 08.08.1997 DE 19734437
(43) Veröffentlichungstag der Anmeldung: 10.02.1999
(73) Patentinhaber: Clariant GmbH, 65929 Frankfurt am Main (DE)
(72) Erfinder: Nass, Bernd, 86152 Augsburg (DE); Wanzke, Wolfgang, Dr., 86405 Meitingen (DE)

(56) Entgegenhaltungen:
- WO-A-97/39053
- WO-A-98/03515
- DATABASE WPI Section Ch, Week 9314 Derwent Publications Ltd., London, GB; Class A13, AN 93-112869 XP002085231 & JP 05 051511 A (ASAHI CHEM IND CO LTD) , 2. März 1993

## Beschreibung

Die Erfindung betrifft eine synergistische Flammschutzmittel-Kombination, die Calcium-, Aluminium- oder Zinkphosphinate und stickstoffhaltige Phosphate enthält.

Polymere werden häufig dadurch flammwidrig ausgerüstet, daß man diesen phosphorhaltige oder halogenhaltige Verbindungen oder Gemische davon zusetzt. Auch Gemische von phosphor- und stickstoffhaltigen Verbindungen werden oft als Flammhemmer verwendet.

Alkalisalze von Phosphinsäuren sind bereits als flammhemmende Zusätze für Polyester vorgeschlagen worden (DE-A-2 252 258). Sie müssen in Mengen bis zu 30 Gew.-% eingebracht werden und haben zum Teil einen ungünstigen, korrosionsfördernden Einfluß auf die Verarbeitungsmaschinen.

Weiterhin sind die Salze von Phosphinsäuren mit einem Alkalimetall oder einem Metall aus der zweiten oder dritten Haupt- oder Nebengruppe des Periodensystems zur Herstellung flammwidriger Polyamid-Formmassen eingesetzt worden, insbesondere die Zinksalze (DE-A-2 447 727).

Calcium- und Aluminiumphosphinate haben sich in Polyestern als besonders wirksam erwiesen (EP-A-699 708). Allerdings ist die Herstellung dieser Phosphinate im technischen Maßstab relativ aufwendig und teuer, was die Einsatzmöglichkeiten der Produkte als Flammhemmer für Kunststoffe sehr stark limitiert.

In der Anmeldung PCT/EP 97/01664 werden synergistisch wirkende Kombinationen von verschiedenen Phosphinaten mit temperaturstabilen und wenig flüchtigen organischen Stickstoffverbindungen beschrieben, die einen besonders guten und zugleich preiswerten Flammschutzeffekt in Polymeren zeigen.

Auch Aluminiumhydroxid oder -phosphat kann in Mischungen mit den genannten Phosphinsäuresalzen als flammhemmender Zusatzstoff eingesetzt werden (deutsche Patentanmeldung Nr. 19708726.4), auch wenn die synergistische Wirkung nicht so ausgeprägt ist, wie bei den organischen Stickstoffverbindungen.

Es wurde nun überraschend gefunden, daß stickstoffhaltige, rein anorganische Phosphate eine ähnlich gute, z. T. aber auch bessere Wirkung im Gemisch mit den Phosphinaten zeigen. Darüber hinaus weisen die erfindungsgemäß ausgerüsteten Formmassen gegenüber handelsüblichen flammwidrigen Formmassen eine hohe Lichtstabilität auf, wenn Lichtschutzmittel vom Typ sterisch gehinderter Amine und/oder UV-Absorber zusammen mit den Flammschutzmittel-Mischungen eingesetzt werden.

Gegenstand der Erfindung ist somit eine synergistische Flammschutzmittel-Kombination für Polymere, die als Komponente A ein Phosphinsäuresalz der Formel (l) und/oder ein Diphosphinsäuresalz der Formel (II) und/oder deren Polymere enthält, 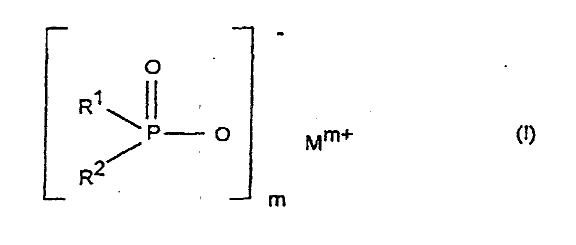 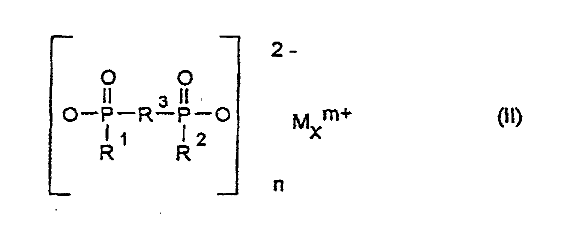 worin
- R¹, R²: C₁-C₆-Alkyl, vorzugsweise C₁-C₄-Alkyl, linear oder verzweigt, z.B. Methyl, Ethyl, n-Propyl, iso-Propyl, n-Butyl, tert.-Butyl, n-Pentyl; Phenyl;
- R³: C₁-C₁₀-Alkylen, vorzugsweise C₁-C₆-Alkylen, linear oder verzweigt, z.B. Methylen, Ethylen, n-Propylen, iso-Propylen, n-Butylen, tert.-Butylen, n-Pentylen, n-Octylen, n-Dodecylen;
C₆-C₁₀-Arylen, z.B. Phenylen, Naphthylen; vorzugsweise Phenylen, Alkylarylen, z.B. Methyl-phenylen, Ethyl-phenylen, tert.-Butylphenylen, Methyl-naphthylen, Ethyl-naphthylen, tert.-Butylnaphthylen;
Arylalkylen, z.B. Phenyl-methylen, Phenyl-ethylen, Phenyl-propylen, Phenyl-butylen;
- M: Calcium-, Aluminium-, Zink-, vorzugsweise Aluminium-lonen;
- m: 2 oder 3;
- n: 1 oder 3:
- x: 1 oder 2
bedeuten, und die als Komponente B Ammoniumpolyphosphate mit Kettenlänge >100 enthält.

Im folgenden bezeichnet der Begriff "Phosphinsäuresalz" Salze der Phosphin- und Diphosphinsäuren und deren Polymere.

Die Phosphinsäuresalze, die in wäßrigem Medium hergestellt werden, sind im wesentlichen monomere Verbindungen. In Abhängigkeit von den Reaktionsbedingungen können unter Umständen auch polymere Phosphinsäuresalze entstehen.

Geeignete Phosphinsäuren als Bestandteil der Phosphinsäuresalze sind beispielsweise:

Dimethylphosphinsäure, Ethyl-methylphosphinsäure, Diethylphosphinsäure, Methyl-n-propylen-phosphinsäure, Methan-di(methylphosphinsäure), Benzol-1,4-(dimethylphosphinsäure), Methyl-phenyl-phosphinsäure, Diphenylphosphinsäure.

Die Salze der Phosphinsäuren gemäß der Erfindung können nach bekannten Methoden hergestellt werden, die in EP-A-699 708 näher beschrieben sind. Die Phosphinsäuren werden dabei in wäßriger Lösung mit Metallcarbonaten, Metallhydroxiden oder Metalloxiden umgesetzt.

Polymere im Sinne der Erfindung sind auch in der Anmeldung PCT/EP 97/01664 auf den Seiten 6 bis 9 beschrieben, worauf hier ausdrücklich Bezug genommen wird.

Die Menge des den Polymeren zuzusetzenden Phosphinsäuresalzes der allgemeinen Formel 1 oder des Diphosphinsäuresalzes der Formel II kann innerhalb weiter Grenzen variieren. Im allgemeinen verwendet man 1 bis 30 Gew.-%, bezogen auf das fertige Polymercompound. Die optimale Menge hängt von der Natur des Polymeren, der Art der Komponente B und vom Typ des eingesetzten Phosphinsäuresalzes selbst ab und kann durch Versuche leicht bestimmt werden. Bevorzugt sind 3 bis 20, insbesondere 5 bis 15 Gew.-%.

Die Phosphinsäuresalze gemäß der Erfindung können je nach Art des verwendeten Polymeren und der gewünschten Eigenschaften in verschiedener physikalischer Form angewendet werden. So können die Phosphinsäuresalze z.B. zur Erzielung einer besseren Dispersion im Polymeren zu einer feinteiligen Form vermahlen werden. Falls erwünscht können auch Gemische verschiedener Phosphinsäuresalze eingesetzt werden.

Die Phosphinsäuresalze gemäß der Erfindung sind thermisch stabil, zersetzen die Polymeren weder bei der Verarbeitung noch beeinflußen sie den Herstellprozess der Kunststoff-Formmasse. Die Phosphinsäuresalze sind unter Herstellungs- und Verarbeitungsbedingungen für Polymere nicht flüchtig.

Als Komponente B enthält die Polymerformmasse ein stickstoffhaltiges Phosphat der Formeln (NH₄)_{y} H_{3-y} PO₄ (Monophosphate) bzw. (NH₄ PO₃)_{z}, (Polyphosphate) wobei y Zahlenwerte von 1 bis 3 annehmen kann und z eine beliebig große Zahl, typischerweise auch als Durchschnittswert einer Kettenlängenverteilung, darstellt. Zwischen den Monophosphaten und den Polyphosphaten kann ein fließender Übergang erfolgen, beispielsweise mit Di-, Triphosphaten usw. Bei (NH₄PO₃)_{z} handelt es sich typischerweise um marktübliche Ammoniumpolyphosphate mit unterschiedlichen Kettenlängen, die nach verschiedenen Verfahren hergestellt werden können. Es können sowohl kurzkettige als auch langkettige Polyphosphate eingesetzt werden, so daß z beispielsweise Werte von 5 bis 10.000 annehmen kann. Bevorzugt sind wenig wasserlösliche, längerkettige Ammoniumpolyphosphate mit Kettenlängen > 100.

Die Menge der den Polymeren zuzusetzenden Phosphate (Komponente B) kann innerhalb weiter Grenzen variieren. Im allgemeinen verwendet man 1 bis 30 Gew.-% bezogen auf das fertige Polymercompound. Die optimale Menge hängt von der Natur des Polymeren, der Art des eingesetzten Phosphinats (Komponente A) sowie vom Typ des Phosphats selbst ab und kann durch Versuche leicht bestimmt werden. Bevorzugt sind 3 bis 20, insbesondere 5 bis 15 Gew.-%.

Bevorzugte thermoplastische Polymere sind technische Kunststoffe wie z.B. Polystyrol-HI (mit erhöhter Schlagzähigkeit), Polyphenylenether, Polyamide, Polyester, Polycarbonate und Blends bzw. Polyblends wie ABS oder PC/ABS.

Besonders bevorzugt sind ABS-Polymere.

Die flammhemmenden Komponenten A und B können in Kunststoff-Formmassen eingearbeitet werden, indem z. B. alle Bestandteile als Pulver und/oder Granulat in einem Mischer vorgemischt und anschließend in einem Compoundieraggregat (z. B. einem Doppelschneckenextruder) in der Polymerschmelze homogenisiert werden. Die Schmelze wird üblicherweise als Strang abgezogen, gekühlt und granuliert. Die Komponenten A und B können auch separat über eine Dosieranlage direkt in das Compoundieraggregat eingebracht werden.

Es ist ebenso möglich, die flammhemmenden Zusätze A und B einem fertigen Polmergranulat bzw. -pulver beizumischen und die Mischung direkt auf einer Spritzgußmaschine zu Formteilen zu verarbeiten.

Bei Polyestern beispielsweise können die flammhemmenden Zusätze A und B auch bereits während der Polykondensation in die Polyestermasse gegeben werden.

Den Formmassen können neben der erfindungsgemäßen flammhemmenden Kombination aus A und B auch Füll- und Verstärkungsstoffe wie Glasfasern, Glaskugeln oder Mineralien wie Kreide zugesetzt werden. Zusätzlich können die Formmassen noch andere Zusätze wie Antioxidantien, Lichtschutzmittel, Gleitmittel, Farbmittel, Nukleierungsmittel oder Antistatika enthalten. Beispiele für die verwendbaren Zusätze sind in EP-A-584 567 angegeben.

Die flammwidrigen Kunststoffmassen eignen sich zur Herstellung von Formkörpern, Filmen, Fäden und Fasern, z. B. durch Spritzgießen, Extrudieren oder Verpressen.

### Beispiele

### 1. Eingesetzte Komponenten

### Handelsübliche Polymere (Granulat):

| | |
|---|---|
| ABS I | ®Novodur P2X (Fa. Bayer AG, D) enthält keine Füll- bzw. Verstärkungs Stoffe |
| | |
| ABS II | ®Novodur L3FR (Fa. Bayer AG, D) enthält bromhaltiges Flammschutzmittel |
| | |
| Polyamid 6 (PA 6): | ®Durethan B29 (Fa. Bayer AG, D) enthält keine Füll- bzw. Verstärkungs stoffe |
| | |
| Polyamid 6 (PA 6-GV): | ®Durethan BKV30 (Fa. Bayer AG, D) enthält 25 % Glasfasern |
| | |
| Polybutylenterephthalat (PBT-GV): | ®Celanex 2300 GV1/30 (Fa. Hoechst Celanese, USA) enthält 30 % Glasfasern |

### Phosphinsäuresalze (Komponente A, pulverförmig):

Aluminiumsalz der Dimethylphosphinsäure, im folgenden als DMPAL bezeichnet
Aluminiumsalz der Methylethylphosphinsäure, im folgenden als MEPAL bezeichnet
Aluminiumsalz der 1-Methoxy-ethylmethylphosphinsäure, im folgenden als Methoxy-MEPAL bezeichnet
Aluminiumsalz der Methylpropylphosphinsäure, im folgenden als MPPAL bezeichnet

Ammoniumpolyphosphat (Komponente B, pulverförmig):
®Hostaflam AP 422 (Fa. Hoechst AG, D)

### Antioxidantien:

AO 1: ®Hostanox O 10 (Fa. Hoechst AG, D), mehrkerniges Phenol
AO 2: ®Hostanox PAR 24 (Fa. Hoechst AG, D), Phosphit

### Lichtschutzmittel:

LS 1: ®Hostavin N 20 (Fa. Hoechst AG, D), sterisch gehindertes Amin, monomer
LS 2: ®Hostavin ARO 8 (Fa. Hoechst AG, D), UV-Absorber, Benzophenontyp
Die Flammschutzmittelkomponenten (Phosphinsäuresalze, A) und gegebenenfalls der Synergist (Ammoniumpolyphosphat, B) wurden in dem in den Tabellen angegebenen Verhältnis mit dem Polymergranulat und evtl. weiteren Additiven vermischt und auf einem Doppelschneckenextruder (Typ Leistritz LSM 30/34) bei Temperaturen von 190-225°C (ABS), bzw. bei Temperaturen von 230-260°C (PA6, PA 6-GV und PBT-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Toshiba IS 100 EN) bei Massetemperaturen von 210-240°C (ABS) bzw., von 240-270°C ( PA 6, PA 6-GV und PBT-GV) zu Prüfkörpern verarbeitet und anhand des UL 94-Tests (Underwriter Laboratories) auf Flammwidrigkeit geprüft und klassifiziert. Die Brennbarkeit der Prüfkörper wurde durch Bestimmung des Sauerstoffindex (LOI nach ASTM D 2863-77) beurteilt.

Tabelle 1 zeigt die Ergebnisse der Vergleichsbeispiele, in denen Phosphinsäuresalze als alleinige Flammschutzmittelkomponenten in ABS, PA 6, PA 6-GV sowie in PBT-GV eingesetzt wurden.

Die Ergebnisse der Beispiele, in denen Phosphinsäuresalze in Kombination mit dem erfindungsgemäßen Synergisten ausgeprüft wurden, sind in der Tabelle 2 aufgelistet. Alle Mengenangaben sind als Gew-% aufgeführt und beziehen sich auf das fertige Polymercompound einschließlich Flammschutzausrüstung.

**Tabelle 1:**

| Vergleichsbeispiele. Aluminiumsalze von Phosphinsäuren als alleinige Flammschutzmittelkomponente in ABS, PA 6, PA 6-GV und PBT-GV | | | | | | | | |
|---|---|---|---|---|---|---|---|---|
| Polymer | MEPAL [%] | DMPAL [%] | MPPAL [%] | Methoxy -MEPAL [%] | AO 1 [%] | AO 2 [%] | Klasse nach UL 94 (1,5 mm) | LOI [%] |
| ABS I | 30 | | | | | | nicht klassifizierbar | 52,5 |
| ABS I | | 30 | | | | | V-2 | 51,0 |
| ABS I | | | 30 | | | | V-1 | 38,0 |
| ABS I | | | | 30 | | | V-1 | 46,5 |
| PA 6 | 15 | | | | | | V-0 | 31,0 |
| PA 6-GV | 20 | | | | | | nicht klassifizierbar | 40,0 |
| PBT-GV | 15 | | | | 0,15 | 0,20 | V-1 | 48,5 |
| PBT-GV | 20 | | | | 0,15 | 0,20 | V-0 | 49,5 |

**Tabelle 2:**

| Beispiele. Aluminiumsalze von Phosphinsäuren in Kombination mit erfindungsgemäßem Synergisten in ABS, PA 6, PA 6-GV und PBT-GV. | | | | | | | | | |
|---|---|---|---|---|---|---|---|---|---|
| Polymer | MEPAL [%] | DMPAL [%] | MPPAL [%] | Methoxy -MEPAL [%] | Hostaflam AP 422 [%] | AO 1 [%] | AO 2 [%] | Klasse nach UL 94 (1,5 mm) | LOI [%] |
| ABS I | 15 | | | | 15 | | | V-0 | 28,5 |
| ABS I | 12,5 | | | | 12,5 | | | V-0 | 26,5 |
| ABS I | 10 | | | | 10 | | | V-2 | 24,0 |
| ABS I | 7,5 | | | | 7,5 | | | V-2 | 23,5 |
| ABS I | | 15 | | | 15 | | | V-0 | 30,0 |
| ABS I | | | 15 | | 15 | | | V-0 | 27,0 |
| ABS I | | | | 15 | 15 | | | V-0 | 27,0 |
| PA 6 | 10 | | | | 5 | | | V-0 | n.b.* |
| PA 6-GV | 10 | | | | 5 | | | V-0 | n.b.* |
| PBT-GV | 10 | | | | 5 | 0,15 | 0,20 | V-0 | 28,0 |

| | | | | | | | | | |
|---|---|---|---|---|---|---|---|---|---|
| *n.b. = nicht bestimmt | | | | | | | | | |

Tabelle 3 zeigt das Ergebnis der künstlichen Belichtung einer erfindungsgemäßen synergistischen Flammschutzmittelkombination in ABS im Vergleich zu einem handelsüblichen ABS mit bromhaltigem Flammschutzmittel in einem ®Suntest-Gerät der Firma Heraeus mit Suprax-Filter bei einer Schwarztafeltemperatur von 55°C± 5°C ohne Beregnung. Bewertungskriterium ist die Verfärbung, gemessen als Yellowness-Index (YI). Daneben wurde die Prüfung nach UL 94 durchgeführt und der LOI-Wert bestimmt.

**Tabelle 3**

| Polymer | MEPAL [%] | Hostaflam AP 422 [%] | LS 1 [%] | LS2 [%] | Klasse nach UL 94 (1,6 mm) | LOI [%] | Y1 nach 0 h | Y1 nach 500 h | Y1 nach 1100 h | Y1 nach 1600 h |
|---|---|---|---|---|---|---|---|---|---|---|
| ABS I | | | 0,5 | 0,5 | nicht klassifizier-bar | 19 | 51 | 39 | 46 | 65 |
| ABS I | 12,5 | 12,5 | 0,5 | 0,5 | V-0 | 26 | 68 | 50 | 52 | 65 |
| ABS II | | | 0,5 | 0,5 | V-1 | 25,5 | 29 | 94 | 101 | 102 |

Aus den Beispielen geht hervor, daß mit der erfindungsgemäßen Kombination von Phosphinsäuresalzen mit Synergist B eine sehr gute Flammschutzwirkung erzielt wird. Daneben wird die Wirksamkeit üblicher Lichtschutzmittel vom Typ sterisch gehinderter Amine (HALS = hindered amine light stabilizer) in Kombination mit UV-Absorbern nicht beeinträchtigt.

## Patentansprüche

1. Synergistische Flammschutzmittel-Kombination für Polymere, enthaltend als Komponente A ein Phosphinsäuresalz der Formel (I) und/oder ein Diphosphinsäuresalz der Formel (II) und/oder deren Polymeren, 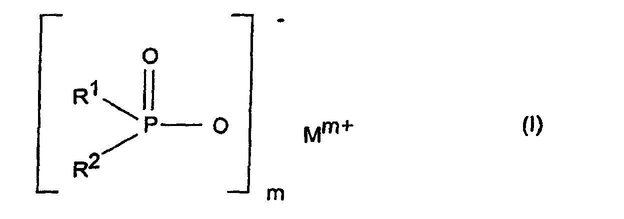 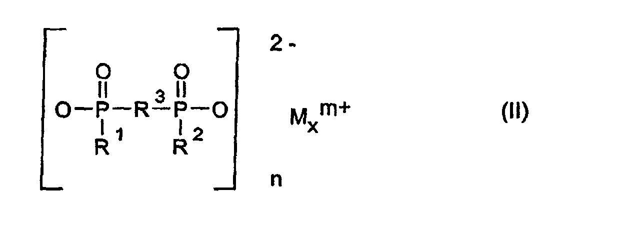 worin
R¹, R² lineares oder verzweigtes C₁-C₆-Alkyl oder Phenyl;
R³ lineares oder verzweigtes C₁-C₁₀-Alkylen, C₆-C₁₀-Arylen oder Alkylarylen oder Arylalkylen,
M Calcium-, Aluminium- oder Zink-lonen;
m 2 oder 3;
n 1 oder 3:
x 1 oder 2
bedeuten
und als Komponente B Ammoniumpolyphosphate mit Kettenlänge >100.

2. Flammschutzmittel-Kombination gemäß Anspruch 1, **dadurch gekennzeichnet, daß**
R¹, R² C₁-C₄-Alkyl,
R³ C₁-C₆-Alkylen oder Phenylen, und
M Aluminium-lonen
bedeuten.

3. Verwendung einer Flammschutzmittel-Kombination gemäß Anspruch 1 oder 2 zur flammfesten Ausrüstung von Polymeren, insbesondere von ABS.

4. Verwendung gemäß Anspruch 3, **dadurch gekennzeichnet, daß** Komponente A und B unabhängig voneinander jeweils in einer Konzentration von 1 bis 30 Gew.-%, bezogen auf das fertige Polymercompound, eingesetzt werden.

5. Verwendung gemäß Anspruch 3, **dadurch gekennzeichnet, daß** Komponente A und B unabhängig voneinander jeweils in einer Konzentration von 3 bis 20 Gew.-%, bezogen auf das fertige Polymercompound, eingesetzt werden.

6. Verwendung gemäß Anspruch 3, **dadurch gekennzeichnet, daß** Komponente A und B unabhängig voneinander jeweils in einer Konzentration von 5 bis 15 Gew.-%, bezogen auf das fertige Polymercompound, eingesetzt werden.

7. Flammfest ausgerüstete Kunststoff-Formmasse, enthaltend eine Flammschutzmittel-Kombination gemäß den Ansprüchen 1 oder 2.

8. Flammfest ausgerüstete Kunststoff-Formmasse gemäß Anspruch 7, **dadurch gekennzeichnet, daß** es sich bei dem Kunststoff um ABS handelt.

## Claims

1. A synergistic flameproofing combination for polymers, containing, as component A, a phosphinic acid salt of the formula (I) and/or a diphosphinic acid salt of the formula (II) and/or polymers thereof 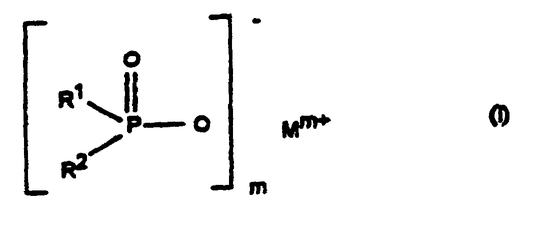 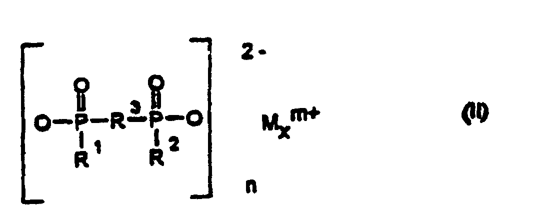 in which
R¹ and R² are linear or branched C₁-C₆-alkyl or phenyl;
R³ is linear or branched C₁-C₁₀-alkylene, C₆-C₁₀-arylene or alkylarylene or arylalkylene,
M is a calcium, aluminum or zinc ion,
m is 2 or 3;
n is 1 or 3;
x is 1 or 2,
and, as component B, ammonium polyphosphates having a chain length > 100.

2. The flameproofing combination as claimed in claim 1, wherein
R¹ and R² are C₁-C₄-alkyl,
R³ is C₁-C₆-alkylene or phenylene and
M is an aluminum ion.

3. The use of a flameproofing combination as claimed in claim 1 or 2 for flameproofing polymers, in particular ABS.

4. The use as claimed in claim 3, wherein components A and B, independently of one another, are each used in a concentration of from 1 to 30% by weight, based on the prepared polymer compound.

5. The use as claimed in claim 3, wherein components A and B, independently of one another, are each used in a concentration of from 3 to 20% by weight, based on the prepared polymer compound.

6. The use as claimed in claim 3, wherein components A and B, independently of one another, are each used in a concentration of from 5 to 15% by weight, based on the prepared polymer compound.

7. A flameproofed plastics molding material, containing a flameproofing combination as claimed in either of claims 1 and 2.

8. The flameproofed plastics molding material as claimed in claim 7, wherein the plastic is ABS.

## Revendications

1. Combinaison synergique d'agents ignifuges pour des polymères, contenant comme constituant A un sel d'acide phosphinique de formule (I) et/ou un sel d'acide diphosphinique de formule (II) et/ou leurs polymères 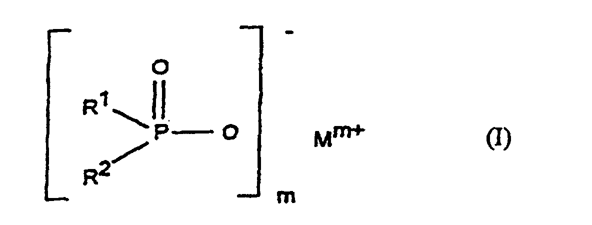 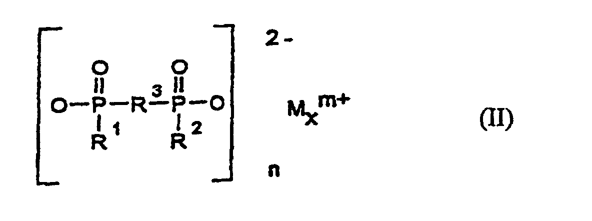 où
R¹, R² représentent un reste alkyle en C₁-C₆ linéaire ou ramifié ou phényle;
R³ représente un reste alkylène en C₁-C₁₀ linéaire ou ramifié, arylène en C₆-C₁₀, alkylarylène ou arylalkylène;
M représente des ions calcium, aluminium ou zinc;
m est égal à 2 ou 3;
n est égal à 1 ou 3;
x est égal à 1 ou 2,
et contenant comme constituant B des polyphosphates d'ammonium ayant une longueur de chaîne supérieure à 100.

2. Combinaison d'agents ignifuges selon la revendication 1, **caractérisée en ce que**
R¹, R² représentent un reste alkyle en C₁-C₄,
R³ représente un reste alkylène en C₁-C₆ ou phénylène, et
M représente des ions aluminium.

3. Utilisation d'une combinaison d'agents ignifuges selon la revendication 1 ou 2 pour ignifuger des polymères, en particulier de l'ABS.

4. Utilisation selon la revendication 3, **caractérisée en ce que** le constituant A et le constituant B sont utilisés chacun, indépendamment l'un de l'autre, en une quantité de 1 à 30 % en masse par rapport à la composition de polymère finale.

5. Utilisation selon la revendication 3, **caractérisée en ce que** le constituant A et le constituant B sont utilisés chacun, indépendamment l'un de l'autre, en une quantité de 3 à 20 % en masse par rapport à la composition de polymère finale.

6. Utilisation selon la revendication 3, **caractérisée en ce que** le constituant A et le constituant B sont utilisés chacun, indépendamment l'un de l'autre, en une quantité de 5 à 15 % en masse par rapport à la composition de polymère finale.

7. Composition de matière plastique à mouler ignifugée contenant une combinaison d'agents ignifuges selon les revendications 1 ou 2.

8. Composition de matière plastique à mouler ignifugée selon la revendication 7, **caractérisée en ce que** la matière plastique est de l'ABS.
